(19) **Europäisches Patentamt**
**European Patent Office**
**Office européen des brevets**

(11) **EP 2 247 192 B1**

(12) **EUROPEAN PATENT SPECIFICATION**

(45) Date of publication and mention
of the grant of the patent:
**10.12.2014 Bulletin 2014/50**

(21) Application number: **09709838.8**

(22) Date of filing: **11.02.2009**

(51) Int Cl.:
*A23L 1/16* (2006.01)          *A21D 10/00* (2006.01)

(86) International application number:
**PCT/NL2009/050058**

(87) International publication number:
**WO 2009/102198 (20.08.2009 Gazette 2009/34)**

(54) **BATTER AND METHOD FOR PREPARING A PASTA**

BACKTEIG UND VERFAHREN ZUR HERSTELLUNG VON TEIGWAREN

BATTEUR ET PROCÉDÉ DE PRÉPARATION D UNE PÂTE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **11.02.2008 NL 2001274**

(43) Date of publication of application:
**10.11.2010 Bulletin 2010/45**

(73) Proprietors:
• **Wageningen Universiteit
6703 HD Wageningen (NL)**
• **Wind, Pierre
2581 TZ Den Haag (NL)**

(72) Inventors:
• **WIND, Pierre
NL-2581 TZ Den Haag (NL)**
• **VAN DER LINDEN, Erik
NL-6717 XE Ede (NL)**

(74) Representative: **Nederlandsch Octrooibureau
P.O. Box 29720
2502 LS The Hague (NL)**

(56) References cited:
**EP-A- 0 117 955       EP-A- 0 130 282
EP-A- 0 754 410       WO-A-01/64056
US-A1- 2001 019 734   US-A1- 2005 271 787
US-A1- 2006 134 295   US-A1- 2007 172 559**

## Description

### Field of the invention

The present invention relates to a batter comprising water, a starch and a protein. The invention is also related to a method for preparing a pasta by extrusion (a shaping technique whereby a deformable substance is pressed through a mould) of a dough in a warm aqueous liquid, and to a pasta that can be prepared according to this method. The invention also comprises a use of a batter for preparing a pasta.

### Background of the invention

Pasta, for instance, macaroni or spaghetti, is according to a conventional process prepared by forming thin strips or figures out of a pasta dough, and to cook them in boiling water. Pasta dough has two basic ingredients: water and (wheat) flour or semolina. It is very firm and generally, it only consists of 25% of water. Such a pasta dough and preparation process for pasta are described for instance in Harold McGee, Over eten en koken, (On Food and Cooking) first edition, 1996, pp. 336-340.

The firmness of the pasta dough is considered by the expert to be of essential importance for maintaining the original form of the formed dough during cooking.

In EP 130.282, a method is described for preparing vegetable pastas, whereby an extrudable dough is made that is extruded in pasta forms that are ultimately dried. Water content of the dough is 25 - 45 % by weight, preferably 27 - 40 % by weight and in particular, 28 - 35 % by weight. Examples have shown that flour content of the dough must be high.

In EP 754.410 A1, a method is described for making pasta products such as noodles from a dough, whereby the water content of the dough is 30 - 50 % by weight, calculated with respect to the quantity of flour. According to the examples, the flour content is about 70% by weight.

US 2001/019734 relates to products containing soya. In example 3, a pasta product is described on the basis of semolina flour with a flour content of 47 % by weight. No additional protein is added.

### Summary of the invention

Surprisingly it has been found that a batter can be made that is extrudable in a warm aqueous liquid, whereby the batter can be formed into a pasta that is present as a separate phase in the aqueous liquid. This batter comprises water, a starch and a protein, and that furthermore has a flour content of less than 50% by weight with respect to the weight of the batter, the batter comprising between 45-95% by weight of water, whereby the weight ratio between the protein and the total quantity of starch in the batter is represented by the symbol $y$ and whereby the weight percentage of the total quantity of starch, with respect to the weight of the batter, is represented by the symbol $x$, whereby the following applies at the same time:

$$\text{(a)} \quad 0.1 \leq y \leq 1.2;$$

$$\text{(b)} \quad 10 \leq x \leq 50;$$

$$\text{(c)} \quad y \geq -\frac{11}{150}x + \frac{290}{150};$$

and

$$\text{(d)} \quad y \leq -\frac{11}{150}x + \frac{895}{150}.$$

With respect to conventional pasta doughs, the batter according to the invention has the great advantage that it is much easier to prepare and to process, especially for and by non-professional cooks, especially in a home environment. In particular, the mixture does not have to be kneaded excessively, contrary to a conventional dough. Also for this reason, edible parts can be preferably mixed into the mixture whereby such parts can to a large extent preserve their original form and/or size.

**Description of the drawing**

The figure shows the weight ratio between the total quantity of gluten and a globular protein and the total quantity of starch in the batter (y) as a function of the weight percentage oft he total quantity of starch, with respect to the weight of the batter (*x*). Letters a through i are situated in the figure in such a way that their coordinates schematically represent the compositions with the corresponding representations according to Example 1. The open circle shows schematically a pasta batter according to Example 2.

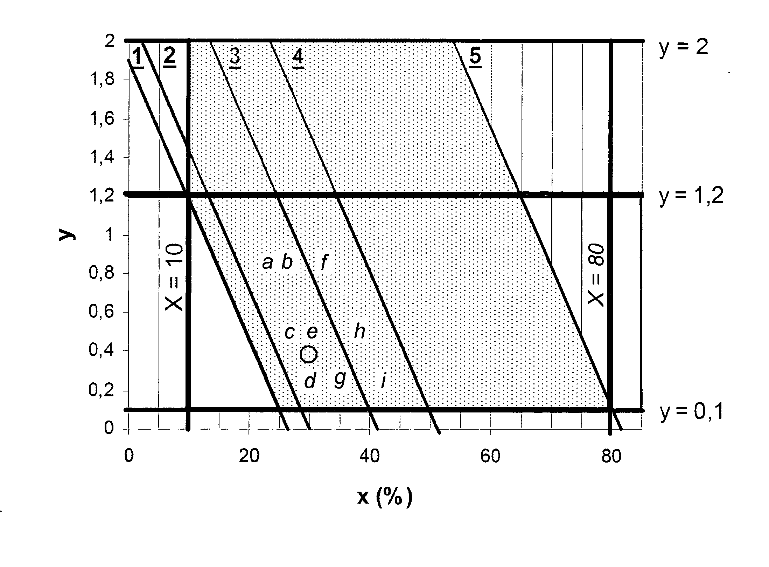

Further clarification for Figure 1. Without having to set up a set of equations, several preferred embodiments of the batter can be described for different preferential combinations of *x and y* by referring to domains that are included by:

- line **1**, preferably line **2**, and

- line **5**, preferably line **4**, and even more preferably line **3**, and

- the line that satisfies the equation x = 10, and

- the line that satisfies the equation, y = 1.2; and

- the line that satisfies the equation y = 0.1.

Herein, line **1** is described by the equation :

$$y = -\frac{11}{150}x + \frac{290}{150}.$$

Line **2** is described by the equation:

$$y = -\frac{11}{150}x + \frac{323}{150}.$$

Line **3** is described by the equation:

$$y = -\frac{11}{150}x + \frac{455}{150}.$$

Line **4** is described by the line::

$$y = -\frac{11}{150}x + \frac{565}{150}.$$

Line **5** is described by the line:

$$y = -\frac{11}{150}x + \frac{895}{150}.$$

**Description of the invention**

Pasta. In this description, the expression "pasta" only covers the foodstuff exposed to a warm, aqueous liquid. This does not include a formed, dried pasta dough.

<u>Composition of the batter</u>. In a preferred embodiment of the batter, for all values of x and *y* applies at the same time:

$$\text{(a)} \quad 0.1 \leq y \leq 1.2;$$

$$\text{(b)} \quad 10 \leq x \leq 50;$$

$$\text{(c)} \quad y \geq -\frac{11}{150}x + \frac{290}{150};$$

and

$$\text{(d)} \quad y \leq -\frac{11}{150}x + \frac{895}{150}.$$

The pasta obtained by extrusion of this batter in a warm, aqueous liquid has the additional advantage that it has a relatively high starch content and has advantageous properties, in particular with respect to the organoleptic properties of the pasta, especially with respect to taste and/or smell. According to an especially preferred embodiment, $y \leq 1$.

In a preferred embodiment applies additionally or alternatively: $x \leq 40$. A starch concentration that is equal to or lower than 50 or 40 % by weight, respectively, calculated on the weight of the batter, is beneficial for the processability of the batter, in particular when the batter contains flour and/or gluten, especially wheat flour and/or wheat gluten. It is preferred that x > 20. Even more preferred is : $x \geq 25$. A starch concentration of more than 20 % by weight, preferably at least 25% by weight, calculated on the weight of the batter, is beneficial for the processability of the batter, especially with respect to the processability during extrusion in a aqueous liquid, in particular with respect to the preservation of the shape of the batter during extrusion.

In a particularly preferred embodiment of the batter, for all values of x and y applies at the same time: (a)

$$\text{(a)} \quad 0.1 \leq y \leq 1.2;$$

(b)

$$\text{(b)} \quad 10 \leq x \leq 40;$$

$$\text{(c)} \quad y \geq -\frac{11}{150}x + \frac{290}{150};$$

and

$$\text{(d)} \quad y \leq -\frac{11}{150}x + \frac{455}{150}.$$

The pasta has favourable properties as far as texture is concerned, especially in that in these areas a good bite can be obtained, especially when the batter comprises gluten and a globular protein.

In an even more preferred embodiment of the batter, for all values of x and *y* applies at the same time :

$$\text{(a)} \quad 0.1 \le y \le 1.2;$$

$$\text{(b)} \quad 10 \le x \le 40;$$

$$\text{(c)} \quad y \ge -\frac{11}{150}x + \frac{323}{150};$$

and

$$\text{(d)} \quad y \le -\frac{11}{150}x + \frac{455}{150}.$$

The pasta has favourable properties as far as texture is concerned, especially in that in these areas an optimal bite can be obtained, especially when the batter comprises gluten and a globular protein.

The organoleptic properties, especially the bite of the pasta are most optimal when $y \ge 0.15$. More preferably, $y \ge 0.20$. Even more preferably, $y \ge 0.25$, and in particular, $y \ge 0.3$.

Composition of a (chicken) egg. A raw egg consists of egg white and a yolk. The composition of a chicken egg is on average as follows. Egg white consists of about 89 % by weight of water and about 11% by weight of protein. This egg white protein is herein further referred to as chicken egg albumin, or more generally, as egg albumin. Egg albumin consists of 54% by weight of ovalbumin. The egg albumin is a globular protein that is preferably used in the batter according to the invention (see below).

The yolk of a chicken egg consists of about 48% of water, about 36% of fat and about 16% of protein. Of the protein fraction, about 80% by weight consists of plasma protein. This plasma protein is also a globular protein and this protein fraction is referred to herein as plasma protein that is obtainable from a (chicken) egg yolk.

Thus, the content of a raw chicken egg consists of about 8% by weight of egg albumin and for about 4% of plasma protein. Overall, a raw chicken egg consists of about 12% by weight of globular proteins.

Composition of the flour. Flour is a source of protein and a source of starch. Common wheat flour consists of starch in an amount of approx. 70 % by weight. Table 2 shows the average composition of common wheat flour. Protein. Gluten is the water-insoluble protein fraction that can be obtained from flour; the water-soluble protein fraction that can be obtained from flour consists of globular grain proteins. About 80% by weight of the protein present in wheat flour, consists of wheat gluten; the remainder of the wheat flour proteins is formed by globular wheat proteins.

The protein. The protein is preferably selected from the group consisting of gluten and a globular protein. The pasta preferably preserves to a large extent its integrity when, for instance when draining with a colander or strainer, the pasta is separated from the warm aqueous liquid.

The gluten is preferably wheat gluten. Wheat gluten are most effective to promote a firm consistency of the pasta. In an embodiment, the gluten can also be left out when a gluten-free product is desired. As such, some people have to follow a gluten-free diet in connection with a disorder from which they are suffering, for instance celiac.

Globular proteins constitute one of the two main categories in which proteins can be divided. Globular proteins distinguish themselves from the other main category (fibrous proteins) in that these - at least in a substantially native (non-denatured) state - are soluble in water to a certain extent whereby they can form a colloidal solution. Examples of globular proteins are egg albumin, in particular ovalbumin, and beta-lactoglobulin. At the batter temperature, which is preferably between 0 °C and 30 °C, the globular proteins according to the invention are preferably to at least 1% by weight, more preferably to at least 3 % by weight, even more preferably to at least 5% by weight, yet even more preferably to at least 10% by weight and in particular for at least 20% by weight soluble in water, with respect to the water. Good solubility of proteins in the batter promotes a firm consistency of the pasta.

According to a preferred embodiment, the protein can be denatured between 50 °C and 100 °C. Thereby, the pasta acquires favourable textural properties, especially when the warm aqueous liquid has an easily controllable temperature of between 60 °C and 100 °C, preferably between 80 °C and 100 °C, in particular between 85 °C and 95 °C. The favourable textural properties are particularly related to promoting a firm consistency, especially a good bite.

The denaturation temperature of globular proteins is known to the skilled person and/or can be determined by him/her. Many edible proteins have a denaturation temperature between 60°C and 80°C (see Harold McGee, Over eten en koken (On Food and Cooking), second edition (2007), pp. 798-799). The denaturation temperature of globular protein can for instance be determined as the temperature whereby coagulation of the protein in an aqueous solution takes place, preferably at a fixed concentration of the globular protein which is preferably between 5 % and 15% by weight, with respect to the weight of the solution. A solution of approx. 10 % by weight of egg albumin coagulates at approx. 80 °C (McGee, second edition (2007), pp. 88-90) and is as such an example of a globular protein having a denaturation temperature of approx. 80 °C. Beta-lactoglobulin, the most important whey protein in cows milk, denatures at approx. 73 °C; for instance, see patent application WO 2007073189, entitled "Controlled gelation of protein mixture by glycosylation".

It is preferred that the batter comprises 1.5 - 25 % by weight of a globular protein, with respect to the weight of the batter. Even more preferably, the batter comprises 2 - 10 % by weight of a globular protein, with respect to the weight of the batter. The globular protein is preferably selected from the group consisting of a globular grain protein, a globular milk protein, a globular egg protein, a globular blood serum protein and a globular soy protein. The globular protein is more preferably selected from the group consisting of a globular milk protein and a globular egg protein, and in particular, it is a globular chicken egg protein. These proteins give the pasta good organoleptic properties, especially with respect to taste and/or texture.

The globular grain protein is preferably wheat protein. The globular milk protein is preferably selected as a whey protein, particularly as beta-lactoglobulin. The globular egg protein is preferably selected from the group consisting of egg albumin and plasma protein. The globular egg protein is preferably egg albumin. The egg albumin is preferably chicken egg albumin. Among the globular egg proteins, particularly egg albumin and especially ovalbumin are especially beneficial for obtaining a high degree of firmness of the pasta. The globular blood serum protein is preferably selected as blood serum albumin. The globular soy protein is preferably selected from the group consisting of glycinin or beta-conglycinin.

Preferably, the gluten and the globular protein together provide for at least 50 % by weight, more preferably for at least 70 % by weight, and in particular at least 80% by weight of the total amount of protein. Such a proportion of the gluten and the globular protein in the total amount of protein is beneficial for the firmness of the pasta.

In an especially preferred embodiment, the batter comprises gluten as well as a globular protein. More in particular, the batter preferably comprises 1 - 7 % by weight of gluten and 2 - 25% by weight of globular protein, with respect to the weight of the batter. It is especially advantageous when the batter comprises, besides 1 - 7 % by weight of gluten, also 2 - 10% by weight of globular (chicken) egg protein, especially (chicken) egg albumin. It has appeared that the presence at the same time of gluten and of a globular protein is beneficial for the texture of the pasta, especially for the so-called bite of the pasta. This is especially the case for (chicken) egg protein, even more in particular for (chicken) egg albumin. In an especially preferred embodiment, the batter comprises wheat flour and (chicken) egg albumin.

In another preferred embodiment, the batter comprises gluten in a concentration of 0 to 3 % by weight, more preferably of 0 to 2 % by weight, calculated on the total weight of the batter. A lower gluten concentration favours a low viscosity of the batter. Preferably, the batter comprises at least 0.1 % by weight of gluten, calculated on the total weight of the batter. This is particularly desired when the batter contains a starch content of more than 35 or 40 % by weight, calculated on the total weight of the batter.

The protein source. The globular milk protein is preferably provided by a protein source selected from the group consisting of milk, milk powder, whey, whey powder, whey protein concentrate, whey protein isolate and beta-lactoglobulin. The globular soy protein is preferably provided by a protein source selected from the group consisting of soy milk, soy flour, soy protein concentrate, soy protein isolate, glycinin and beta-conglycinin. The globular egg protein is preferably a globular chicken egg protein and is preferably provided by a protein source selected from the group consisting of raw (chicken) eggs, egg whites from raw (chicken) eggs, yolks of (chicken) eggs, ovalbumin (of chicken egg) and commercially available egg albumin preparations (of chicken egg protein). An example of a commercially available egg albumin preparation is dried egg albumin, for instance, available as EAP-HGI, produced by Belovo, Belgium. The globular blood serum protein is preferably provided by a protein source selected from the group consisting of blood and blood serum albumin.

The gluten is preferably provided by a preparation that has a gluten content of at least 5% by weight, with respect to the preparation, such as for instance a flour, a meal, or a mixture of both. Even more preferably, the gluten is provided by a preparation that has a gluten content of at least 20% by weight, with respect to the preparation, such as a gluten flour. When the gluten is selected as wheat gluten, it is preferably provided by a preparation that has a gluten content of at least 5% by weight, with respect to the preparation, such as for instance a wheat flour, a wheat meal, or a mixture of both. Most preferably, the gluten is provided by a preparation that has a gluten content of at least 40% by weight, with respect to the preparation, such as for instance wheat gluten flour, a wheat protein concentrate or a wheat protein isolate. Wheat gluten flour is a powdery product that preferably contains at least 80% by weight of protein.

Gluten can be fully or partially deamidated. Partially deamidated gluten is available for instance as SWP (Soluble Wheat Protein) produced by Amylum NV, Belgium.

Preferably, the batter comprises wheat flour and eggs, whereby the weight ratio between the wheat flour and the contents of the eggs lies between 1:1 and 1:2. In this manner, using simple ingredients, a delicious pasta with good texture can be prepared, whereby the pasta is obtainable by extrusion of the batter in a warm aqueous liquid.

The starch. Good results can be obtained when the starch is selected from the group consisting of wheat starch, potato starch and corn starch.

The starch source. The wheat starch is preferably provided by a starch source selected from the group consisting of wheat flour and wheat meal. The potato starch is preferably provided by a starch source selected from the group consisting of potato puree (mashed potato), freeze-dried potato puree (mashed potato) and a preparation containing at least 70% potato starch by weight with respect to the weight of the preparation. The corn starch is preferable provided by a starch source selected from the group consisting of a corn flour and a preparation containing at least 70% by weight of corn starch, with respect to the weight of the preparation. Such a preparation containing at least 70% by weight of corn starch is for instance commercially available as Maïzena, Koopmans, The Netherlands.

The batter comprises less than 50% by weight of flour. In particular, the batter comprises less than 40% by weight of flour. A low flour content is beneficial for a low viscosity of the batter. In a preferred embodiment, the batter comprises a flour content of at least 5% by weight, more preferably of at least 15% by weight, with respect to the total weight of the batter. The flour is preferably selected as wheat flour. Wheat flour is a suitable gluten source. In addition, it has been found that with a batter containing wheat flour, a pasta with a good consistency can be prepared.

In a preferred embodiment, the batter comprises no flour, and as starch source only the starch itself is used. Thereby, the pasta can obtain a certain (meaning: smaller) degree of opacity or (a higher degree of) transparency (transparency is the opposite of opacity).

Possible other ingredients in the batter. In a preferred embodiment, the batter comprises 0.5 -15% by weight of fat and/or oil, with respect to the weight of the batter.

In a preferred embodiment, the batter comprises an added sweetener in an amount of up to 10 % by weight with respect to the weight of the batter. More preferably, the batter comprises an added sweetener in an amount of up to 5% by weight, with respect to the weight of the batter. Even more preferably, the batter comprises an added sweetener in an amount of up to 1% by weight, with respect to the weight of the batter. In a particularly preferred embodiment, the batter comprises no added sweetener. If it is so desired that the batter contains an added sweetener, the minimum content is 0.1% by weight. The added sweetener is preferably selected from the group consisting of saccharose, dextrose, sorbitol, saccharine, cyclamate and aspartame.

Preferably, the batter comprises no baking powder in an amount of 2.3 % by weight. In a preferred embodiment, the batter comprises leavening agents, such as baking powder, in a quantity of 0 to 1% by weight, with respect to the weight of the batter. It is even more preferred that the batter is free from added leavening agents, since these are generally not beneficial for the consistency of the pasta.

In a preferred embodiment, the batter comprises edible parts in a quantity of 0.1 - 30 % by weight, calculated as the dry weight of the parts, with respect to the weight of the starch. Advantageously, after working them in the batter, the edible parts preserve to a large extent their original form and/or size. This is a great benefit with respect to conventional pasta doughs which due to their consistency require such a high mixing effort, that when edible parts, such as pieces of vegetable, meat, fish, seafood, fruit or even nuts are mixed with these doughs, these parts fall partially apart.

Preferably, these edible parts are in powder form or they consist of small pieces with an average mass, calculated on the dry weight of the parts, of 10 mg to 5 g, preferably from 100 mg to 2 g.

The edible parts preferably comprise herbs, spices, vegetables, meat, fish, seafood, fruit, nuts or mixtures thereof. The edible parts can be dried. In an especially preferred embodiment, the edible parts comprise vegetable and/or fruit fibres.

The batter may comprise a vegetable or a fruit juice. This may be beneficial for the taste of the pasta. In an especially preferred embodiment, the batter comprises tomato puree or tomato juice. According to this description, the notion "juice" must be explained in an ample sense. In the widest sense of the word, this term comprises an aqueous mixture that comprises vegetables, fruit, parts of vegetables and/or fruit or organic components present in vegetables and/or fruit. Preferably, this terms comprises freshly squeezed juice, an aqueous extract or a concentrate (possibly extended with an aqueous liquid) obtained from vegetables and/or fruit.

Other advantageous properties of the batter. According to a preferred embodiment, the batter has a Brookfield viscosity of 100 (one hundred) mPa.s to 150,000 (one hundred and fifty thousand) mPa.s, measured at 25 °C. More preferably, the batter has a Brookfield viscosity of 200 (twee hundred) to 100,000 (one hundred thousand) mPa.s, measured at 25 °C. Under certain conditions, preferably when the batter comprises less than 5% by weight of wheat flour, the Brookfield viscosity can be even higher, for instance up to 200,000 (two hundred thousand) or 300,000 (three hundred thousand) mPa.s, measured at 25 °C. For instance, viscosity can be determined with a LVT type Brookfield viscometer. According to this preferred embodiment, the batter has a favourable stability and processability, especially with respect to processability in the method for preparing a pasta according to the invention (see below). A Brookfield viscosity of 500 (five hundred) to 50,000 (fifty thousand) mPa.s, measured at 25 °C, is especially favourable, in particular when the batter is provided with edible parts, because such a batter has a good balance of stability, especially regarding the sagging or creaming of the edible parts, and processability. Most preferably, the batter has a Brookfield viscosity of 1000 (one thousand) to 10,000 (ten thousand) mPa.s, measured at 25 °C, since such a batter has an optimal balance between processability and stability.

The batter comprises between 45 - 95 % by weight of water, preferably between 50 - 90 % by weight of water, most preferably, between 55 - 90 % by weight of water, with respect to the total weight of the batter. Within this water content, the composition of the batter can easily be varied while preserving the good processability of the batter during preparation and extrusion.

Method for preparing a pasta. The invention also provides for a method for preparing a pasta wherein a batter is extruded through a nozzle into an aqueous liquid, whereby the aqueous liquid has a temperature of 60 - 100 °C at a pressure of $10^5$ Pa (about 1 atm.), and whereby the batter is kept in contact for 30 sec - 30 minutes, preferably between 1 minute - 10 minutes with the aqueous liquid; and whereby the batter comprises water, a starch and a protein, and that furthermore has a flour content of less than 50% by weight with respect to the weight of the batter, the batter comprising between 45-95% by weight of water, whereby the weight ratio between the protein and the total amount of starch in the batter is represented by the symbol y and whereby the weight percentage of the total amount of starch with respect to the weight of the batter is represented by the symbol x; whereby the following applies at the same time:

$$\text{(a)} \quad 0.1 \leq y \leq 1.2;$$

$$\text{(b)} \quad 10 \leq x \leq 50;$$

$$\text{(c)} \quad y \geq -\frac{11}{150}x + \frac{290}{150};$$

and

$$\text{(d)} \quad y \leq -\frac{11}{150}x + \frac{895}{150}.$$

If the aqueous liquid is exposed to a pressure over $10^5$ Pa (approx. 1 atm.), and/or if the aqueous liquid contains significant quantities of water soluble substances, for instance kitchen salt, then the temperature of the aqueous liquid can, if so desired, be set above 100 °C, for instance to 120 °C or 140 °C.

To prevent undesired side-reactions, it is desired that the temperature of the aqueous liquid remains below 180 °C, preferably below 160 °C.

For kitchen use, it is preferred to have an aqueous liquid temperature between 70 °C and 100 °C, at a pressure of $10^5$ Pa (approx. 1 atm.).

In a particularly preferred embodiment, the aqueous liquid does not boil. It has appeared that the use of a non-boiling aqueous liquid is beneficial for the appearance of the pasta, especially with respect to its surface, in particular with respect to the absence of bulges from the surface. According to this preferred embodiment, the aqueous liquid has a temperature of 70 °C to less than 100°C; even more preferable, the aqueous liquid has a temperature of 80 °C to 95 °C, at a pressure of $10^5$ Pa (approx. 1 atm.).

Preferably, the aqueous liquid comprises water in an amount of 80 - 100 % by weight, calculated with respect to the total weight of the aqueous liquid. The pasta has the best taste when it is prepared in water or in an aqueous kitchen salt solution.

The nozzle has an opening that preferably has a smallest dimension of between 0.1 - 10 mm, preferably between 0.5 - 5 mm. Additionally or alternatively, the nozzle has a largest dimension of 0.1 - 500 mm, preferably 0.5 - 200 mm. The nozzle can have an opening with a circular diameter, or the diameter of the opening of the nozzle can have another form, such as an oval, a square, or a rectangular shape or the shape of a star. The nozzle can also have a provision for making hollow pasta products such as little tubes.

By providing the nozzle in this manner, one can provide in a practical manner a great variety of forms in which the pasta can be made, for instance, spaghetti, fusilli, cannelloni, lasagna sheets, etc.

In a preferred embodiment during and/or after extrusion of the batter, the aqueous liquid and/or the extruded batter is exposed to ultrasound vibrations. In this manner, the pasta can advantageously obtain an even smoother surface.
Other aspects of the invention. The invention further relates to a pasta obtainable by the method according to the invention. The invention also relates to a use of the batter according to the invention for preparing a pasta.

**Examples**

Example 1. Preparation of a pasta by extrusion of a batter in water with a temperature of 80 °C, whereby the batter consists of water, wheat flour and egg albumin.

A batter or mixture is prepared by mixing water, wheat flour and egg albumin in different compositions, represented by letters a through i, see Table 1; for a graphic representation, see also Figure 1. Batters A to E are batters according to the invention; batters F to I are comparison batters.
The wheat flour was obtained from Laarmans, C.I.V. Superunie B.A. For the composition of the flour, one started from common flour, see Table 2. Dried egg albumin (EAP-HGI) was obtained from Belovo, Belgium.
The pasta was prepared by extruding the batter using a 10 ml disposable injection syringe without needle (BD Plastipak, Becton Dickinson S.A. Spain) in hot water with a temperature of 80 °C, whereby the extruded batter was kept in contact with the warm water for a period of 3 minutes. One day after preparation, the pasta was evaluated for firmness, elasticity, thickness, surface roughness, bite and colour. The results in terms of bite as a function of x and y, are shown in Table 3. In all cases, it was possible to create a pasta with a certain consistency.

Table 1. Contents of water, wheat flour and egg albumin in the batter.

| Batter | Wheat flour(wt. %) | Egg albumin (wt.%) | Water (wt.%) | Total (wt. %) |
|---|---|---|---|---|
| A | 30.7 | 15.3 | 54 | 100 |
| B | 36.7 | 18.3 | 45 | 100 |
| C | 36.8 | 9.2 | 54 | 100 |
| D | 41.8 | 4.2 | 54 | 100 |
| E | 44 | 11 | 45 | 100 |
| F | 46 | 23 | 31 | 100 |
| G | 50 | 5 | 45 | 100 |
| H | 55.2 | 13.8 | 31 | 100 |
| I | 62.7 | 6.3 | 31 | 100 |

The value of y as shown in Table 3 was calculated on the basis of the gluten present (see Table 2) and the globular protein present, i.e. egg albumin (see Table 1) and the globular wheat protein (see Table 2). As such, for instance for batter a: $y = (15.3 + 2.5 + 0.77) / 21.5 = 0.86$.

Table 2. Composition of a common wheat flour

| | |
|---|---|
| Starch (wt. %) | 70 |
| Other carbohydrates (wt.%) | 6.5 |
| gluten (wt.%) | 8 |
| Other water-soluble wheat proteins (= globular wheat protein) (wt.%) | 2.5 |
| Fat (wt. %) | 1 |
| Moisture (wt.%) | 12 |
| Total (wt.%) | 100 |

Table 3. Composition of the batter; result after extrusion in hot water.

| Batter | Starch (wt.%) | Gluten (wt.%) | Globular Wheat protein (wt.%) | x (wt.%) | y | Bite |
|---|---|---|---|---|---|---|
| A | 21.5 | 2.5 | 0.77 | 21.5 | 0.86 | Acceptable |
| B | 25.7 | 2.9 | 0.92 | 25.7 | 0.86 | Too hard |
| C | 25.8 | 2.9 | 0.92 | 25.8 | 0.51 | Good |

(continued)

| Batter | Starch (wt.%) | Gluten (wt.%) | Globular Wheat protein (wt.%) | x (wt.%) | y | Bite |
|---|---|---|---|---|---|---|
| D | 29.3 | 3.3 | 1.05 | 29.3 | 0.29 | Too soft |
| E | 30.8 | 3.5 | 1.10 | 30.8 | 0.51 | Too hard |
| F | 32.2 | 3.7 | 1.15 | 32.2 | 0.86 | Too hard |
| G | 35.0 | 4.0 | 1.25 | 35.0 | 0.29 | Optimal |
| H | 38.6 | 4.4 | 1.38 | 38.6 | 0.51 | Too hard |
| I | 43.9 | 5.0 | 1.57 | 43.9 | 0.29 | Too hard |

Example 2. Preparation of a pasta by extrusion of a batter in water having a temperature of 80 °C, whereby the batter is made of flour and eggs.

A batter can be made up of 125 g of wheat flour and 3 chicken eggs, with the contents of each egg weighing 57 grams. The composition of the eggs is indicated above. From this batter, a pasta can be made according to the method mentioned in Example 1. One day after preparation, the bite of the pasta is good. The composition is as follows: x = 30.6; y = 0.38 (also see Figure 1). Calculation of y is based on the ratios of the gluten present and the global protein present, this being globular wheat protein and globular egg protein.

To illustrate this calculation: the gluten and globular wheat protein form together the total quantity of protein present in wheat flour, this being together 10.5 % by weight (see table 1). The content of the eggs comprises 12% of globular egg protein (see above). The wheat flour provides as such 13.1 grams of protein consisting of gluten and globular wheat protein. The eggs provide together 20.5 grams of globular egg protein. The wheat flour provides 88 g of starch. The weight of the batter is 296 grams.

Now, calculation of x and y is as follows: x = 88/296 = 30 % by weight, y = (13.1 + 20.5)/88 = 0.38.

**Claims**

1.  Pasta batter comprising water, a starch and a protein, and that furthermore has a flour content of less than 50 % by weight with respect to the weight of the batter, the batter comprising between 45 - 95 % by weight of water, whereby the weight ratio between the protein and the total quantity of starch in the batter is represented by the symbol y and whereby the weight percentage of the total quantity of starch, with respect to the weight of the batter, is represented by the symbol x; whereby the following applies at the same time:

$$(a) \quad 0.1 \leq y \leq 1.2;$$

$$(b) \quad 10 \leq x \leq 50;$$

$$(c) \quad y \geq -\frac{11}{150}x + \frac{290}{150};$$

and

$$(d) \quad y \leq -\frac{11}{150}x + \frac{895}{150}.$$

2.  Batter according to claim 1, whereby the protein is a gluten, a globular protein or a mixture thereof.

3.  Batter according to claim 2, whereby the globular protein is selected from the group consisting of a globular grain protein, a globular milk protein, a globular egg protein, a globular blood serum protein and a globular soy protein.

4. Batter according to any one of the preceding claims, whereby the batter comprises edible parts, the edible parts comprising herbs, spices, vegetables, meat, fish, seafood, fruit, nuts or mixtures thereof, in an amount of 0.1 - 30 % by weight, calculated as dry weight of the parts, with respect to the weight of the starch.

5. Batter according to any one of the preceding claims, whereby the batter has a Brookfield viscosity of 100 to 150.000 mPa.s, measured at 25 °C.

6. Batter according to any one of the preceding claims, whereby the batter does not include an added sweetener.

7. Method for preparing a pasta, wherein a pasta batter is extruded through a nozzle into an aqueous liquid, whereby the aqueous liquid has a temperature of 60 to 100 °C at a pressure of $10^5$ Pa (approx. 1 atm), and whereby the batter is kept in contact for 30 seconds to 30 minutes with the aqueous liquid, whereby the batter comprises between 45 - 95 % by weight of water, a starch and a protein, and that furthermore has a flour content of less than 50 % by weight with respect to the weight of the batter, whereby the weight ratio between the protein and the total amount of starch in the batter is represented by the symbol $y$ and whereby the weight percentage of the total amount of starch, with respect to the weight of the batter, is represented by the symbol x; whereby the following applies at the same time:

$$\text{(e)} \quad 0.1 \leq y \leq 1.2;$$

$$\text{(f)} \quad 10 \leq x \leq 50;$$

$$\text{(g)} \quad y \geq -\frac{11}{150}x + \frac{290}{150};$$

and

$$\text{(h)} \quad y \leq -\frac{11}{150}x + \frac{895}{150}.$$

8. Method according to claim 7, whereby the aqueous liquid has a temperature of 70 °C to less than 100 °C at a pressure of $10^5$ Pa (approx. 1 atm).

9. Method according to claim 7 or 8, whereby the aqueous liquid comprises water in an amount of 80 - 100 % by weight, calculated on the total weight of the aqueous liquid.

10. Method according to any one of claims 7-9, whereby the nozzle has an opening with a largest dimension of 0.1 - 500 mm.

11. Method according to any one of claims 7-10, wherein during and/or after extrusion of the batter, the aqueous liquid and/or the extruded batter are exposed to ultrasound vibrations.

12. Pasta obtainable by the method according to any one of claims 7-11.

13. Use of the pasta batter according to any one of claims 1-6 for preparing a pasta.

**Patentansprüche**

1. Teigwarenteig der Wasser, einer Stärke und einem Protein umfasst, und der außerdem einen Mehlgehalt von weniger als 50 Gewichtsprozent bezogen auf das Gewicht des Teigs aufweist, wobei der Teig zwischen 45 - 95 Gewichtsprozent Wasser aufweist, wobei das Gewichtsverhältnis zwischen dem Protein und der Gesamtmenge der Stärke im Teig durch das Symbol y dargestellt ist und wobei der Gewichtsprozentsatz der Gesamtmenge der Stärke, bezogen auf das Gewicht des Teigs, durch das Symbol x dargestellt ist, wobei gleichzeitig das Folgende gilt:

$$(a)\ 0,1 \leq y \leq 1,2;$$

$$(b)\ 10 \leq x \leq 50;$$

$$(c)\ y \geq -\frac{11}{150}x + \frac{290}{150};$$

und

$$(d)\ y \leq -\frac{11}{150}x + \frac{895}{150}.$$

2. Teig nach Anspruch 1, wobei das Protein ein Gluten, ein globuläres Protein oder ein Gemisch daraus ist.

3. Teig nach Anspruch 2, wobei das globuläre Protein aus der Gruppe bestehend aus einem globulären Getreideprotein, einem globulären Milchprotein, einem globulären Eiprotein, einem globulären Blutserumsprotein und einem globulären Sojaprotein ausgewählt ist.

4. Teig nach einem der vorhergehenden Ansprüche, wobei der Teig essbare Teile umfasst, wobei die essbaren Teile Kräuter, Gewürze, Gemüse, Fleisch, Fisch, Meeresfrüchte, Obst, Nüsse oder Gemische daraus umfassen, in einer Menge von 0,1-30 Gewichtsprozent, berechnet als Trockenmassegewicht der Teile bezogen auf das Gewicht der Stärke.

5. Teig nach einem der vorhergehenden Ansprüche, wobei der Teig eine Brookfield-Viskosität von 100 bis 150.000 mPa·s, gemessen bei 25°C, aufweist.

6. Teig nach einem der vorhergehenden Ansprüche, wobei der Teig kein zugesetztes Süßungsmittel enthält.

7. Verfahren zur Herstellung einer Teigware, wobei ein Teigwarenteig durch eine Düse in eine wässrige Flüssigkeit stranggepresst wird, wobei die wässrige Flüssigkeit eine Temperatur von 60 bis 100°C bei einem Druck von $10^5$ Pa (annähernd 1 atm) aufweist, und wobei der Teig 30 Sekunden bis 30 Minuten lang mit der wässrigen Flüssigkeit in Kontakt gehalten wird, wobei der Teig zwischen 45 - 95 Gewichtsprozent Wasser, eine Stärke und ein Protein umfasst und außerdem einen Mehlgehalt von weniger als 50 Gewichtsprozent bezogen auf das Gewicht des Teigs aufweist, wobei das Gewichtsverhältnis zwischen dem Protein und der Gesamtmenge der Stärke im Teig durch das Symbol y dargestellt ist und wobei der Gewichtsprozentsatz der Gesamtmenge der Stärke bezogen auf das Gewicht des Teigs durch das Symbol x dargestellt ist, wobei das Folgende gleichzeitig gilt:

$$(e)\ 0,1 \leq y \leq 1,2;$$

$$(f)\ 10 \leq x \leq 50;$$

$$(g)\ y \geq -\frac{11}{150}x + \frac{290}{150};$$

und

$$(h) \quad y \leq -\frac{11}{150}x + \frac{895}{150} .$$

**8.** Verfahren nach Anspruch 7, wobei die wässrige Flüssigkeit eine Temperatur von 70°C bis weniger als 100°C bei einem Druck von $10^5$ Pa (annähernd 1 atm) aufweist.

**9.** Verfahren nach Anspruch 7 oder 8, wobei die wässrige Flüssigkeit Wasser in einer Menge von 80 - 100 Gewichtsprozent, berechnet bezüglich des Gesamtgewichts der wässrige Flüssigkeit, umfasst.

**10.** Verfahren nach einem der Ansprüche 7 bis 9, wobei die Düse eine Öffnung mit einer größten Abmessung von 0,1 - 500 mm aufweist.

**11.** Verfahren nach einem der Ansprüche 7 bis 10, wobei während und/oder nach einem Strangpressen des Teigs die wässrige Flüssigkeit und/oder der stranggepresste Teig Ultraschallvibrationen ausgesetzt wird.

**12.** Teigware, erhältlich durch ein Verfahren nach einem der Ansprüche 7 bis 11.

**13.** Verwendung eines Teigwarenteigs nach einem der Ansprüche 1 bis 6 zur Herstellung einer Teigware.

**Revendications**

**1.** Pâte pour pâtes alimentaires comprenant de l'eau, un amidon et une protéine, et qui a en outre une teneur en farine inférieure à 50 % en poids par rapport au poids de la pâte, la pâte comprenant entre 45 - 95 % en poids d'eau, où le rapport en poids entre la protéine et la quantité totale d'amidon dans la pâte est représenté par le symbole $y$ et où le pourcentage en poids de la quantité totale d'amidon, par rapport au poids de la pâte, est représenté par le symbole $x$ ; où ce qui suit s'applique en même temps :

$$(a) \quad 0,1 \leq y \leq 1,2 \ ;$$

$$(b) \quad 10 \leq x \leq 50 \ ;$$

$$(c) \quad y \geq -\frac{11}{150}x + \frac{290}{150} \ ;$$

et

$$(d) \quad y \leq -\frac{11}{150}x + \frac{895}{150} .$$

**2.** Pâte selon la revendication 1, où la protéine est un gluten, une protéine globulaire ou un mélange de ceux-ci.

**3.** Pâte selon la revendication 2, où la protéine globulaire est choisie dans le groupe consistant en une protéine de grains globulaire, une protéine de lait globulaire, une protéine d'oeufs globulaire, une protéine de sérum sanguin globulaire et une protéine de soja globulaire.

4. Pâte selon l'une quelconque des revendications précédentes, où la pâte comprend des parties comestibles, les parties comestibles comprenant des herbes, des épices, des légumes, de la viande, du poisson, des fruits de mer, des fruits, des noix ou des mélanges de ceux-ci, en une quantité de 0,1 - 30 % en poids, calculée en poids sec des parties, par rapport au poids de l'amidon.

5. Pâte selon l'une quelconque des revendications précédentes, où la pâte a une viscosité Brookfield de 100 à 150 000 mPa.s, mesurée à 25°C.

6. Pâte selon l'une quelconque des revendications précédentes, où la pâte n'inclut pas d'édulcorant ajouté.

7. Procédé pour préparer des pâtes alimentaires, où une pâte pour pâtes alimentaires est extrudée au travers d'une buse dans un liquide aqueux, où le liquide aqueux a une température de 60 à 100°C à une pression de $10^5$ Pa (approximativement 1 atm), et où la pâte est maintenue en contact pendant 30 secondes à 30 minutes avec le liquide aqueux, où la pâte comprend entre 45 - 95 % en poids d'eau, un amidon et une protéine, et qui a en outre une teneur en farine inférieure à 50 % en poids par rapport au poids de la pâte, où le rapport en poids entre la protéine et la quantité totale d'amidon dans la pâte est représenté par le symbole $y$ et où le pourcentage en poids de la quantité totale d'amidon, par rapport au poids de la pâte, est représenté par le symbole $x$ ; où ce qui suit s'applique en même temps :

$$(e) \quad 0{,}1 \leq y \leq 1{,}2 \; ;$$

$$(f) \quad 10 \leq x \leq 50 \; ;$$

$$(g) \quad y \geq -\frac{11}{150}\, x + \frac{290}{150} \; ;$$

et

$$(h) \quad y \leq -\frac{11}{150} x + \frac{895}{150} \; .$$

8. Procédé selon la revendication 7, où le liquide aqueux a une température de 70°C à moins de 100°C à une pression de $10^5$ Pa (approximativement 1 atm).

9. Procédé selon la revendication 7 ou 8, où le liquide aqueux comprend de l'eau en une quantité de 80 - 100 % en poids, calculée sur le poids total du liquide aqueux.

10. Procédé selon l'une quelconque des revendications 7-9, où la buse a une ouverture ayant une plus grande dimension de 0,1 - 500 mm.

11. Procédé selon l'une quelconque des revendications 7-10, où pendant et/ou après l'extrusion de la pâte, le liquide aqueux et/ou la pâte extrudée sont exposés à des vibrations ultrasonores.

12. Pâtes alimentaires susceptible d'être obtenues par le procédé selon l'une quelconque des revendications 7-11.

13. Utilisation de la pâte pour pâtes alimentaires selon l'une quelconque des revendications 1-6 pour préparer des pâtes alimentaires.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 130282 A
- EP 754410 A1
- US 2001019734 A
- WO 2007073189 A

**Non-patent literature cited in the description**

- **HAROLD MCGEE.** Over eten en koken. 1996, 336-340
- **HAROLD MCGEE.** Over eten en koken. 2007, 798-799